(19) **Europäisches Patentamt**

**European Patent Office**

**Office européen des brevets**

(11) Veröffentlichungsnummer : **0 329 600 B1**

(12) # EUROPÄISCHE PATENTSCHRIFT

(45) Veröffentlichungstag der Patentschrift :
**05.02.92 Patentblatt 92/06**

(21) Anmeldenummer : **89730032.3**

(22) Anmeldetag : **15.02.89**

(51) Int. Cl.⁵ : **A47B 63/00,** B65G 1/133

(54) **Regalanlage für die Bücher einer Bibliothek.**

(30) Priorität : **17.02.88 DE 3805369**

(43) Veröffentlichungstag der Anmeldung :
**23.08.89 Patentblatt 89/34**

(45) Bekanntmachung des Hinweises auf die
Patenterteilung :
**05.02.92 Patentblatt 92/06**

(84) Benannte Vertragsstaaten :
**AT BE CH DE ES FR GB GR IT LI LU NL SE**

(56) Entgegenhaltungen :
**EP-A- 0 022 441
DE-B- 1 219 864
GB-A- 206 186
PATENT ABSTRACTS OF JAPAN, Band 10, Nr.
142 (M-481)[2199], 24. Mai 1986; & JP-A-60 262
702 (NIPPON DENKI) 26-12-1985
Elemente des Buch- und Bibliothekswesens,
Band 4, Peter Schwergler "Einrichtung und
technische Ausstattung von Bibliotheken"**

(73) Patentinhaber : **Engel, Wolfgang
Rhumeweg 26
W-1000 Berlin 37 (DE)**
Patentinhaber : **Kusserow, Jörg-Peter
Jacobistrasse 16
W-3000 Hannover 1 (DE)**
Patentinhaber : **Zillich, Klaus
Rhumeweg 26
W-1000 Berlin 37 (DE)**

(72) Erfinder : **Engel, Wolfgang
Rhumeweg 26
W-1000 Berlin 37 (DE)**
Erfinder : **Kusserow, Jörg-Peter
Jacobistrasse 16
W-3000 Hannover 1 (DE)**
Erfinder : **Zillich, Klaus
Rhumeweg 26
W-1000 Berlin 37 (DE)**

(74) Vertreter : **Lüke, Dierck-Wilm, Dipl.-Ing.
Gelfertstrasse 56
W-1000 Berlin 33 (DE)**

**EP 0 329 600 B1**

## Beschreibung

Die Erfindung bezieht sich auf eine Regalanlage, insbesondere Umlaufregalanlage, für die Bücher einer Bibliothek, mit mindestens einseitig offenen, vertikalen Regalkästen und mit in diesen angeordneten Einschüben zur Aufnahme der Bücher.

Eine Umlaufregalanlage dieser Art ist aus dem Fachbuch "Elemente des Buch- und Bibliothekswesens", Band 4, Peter Schweigler "Einrichtung und Ausstattung von Bibliotheken", Seite 247 ff vorbekannt. Die einzelnen Regale bilden hierbei zwei übereinander angeordnete Blöcke, in denen die einzelnen Regale mittels Rollen verfahrbar sind. An beiden Stirnseiten der Blöcke arbeiten Transportbühnen für das senkrechte Versetzen der Regale, die in einem ständigen Kreislauf das Umlaufregal durchlaufen. Das jeweils vorderste Regal des ersten Regalblockes wird zum zweiten Regalblock versetzt und bildet dort die letzte Scheibe. Ebenso wird auf der anderen Seite das vorderste Regal des zweiten Regalblockes zum letzten Regal des ersten Regalblockes. Bei jedem Takt rücken alle Regale in den Blöcken um eine Regalbreite vor. Die Bedienung der Regale erfolgt von den Stirnseiten der Regalblöcke. Dabei werden die einzelnen Regale während des Versetzens an einer Arbeitsbühne vorbeibewegt, von der aus gleichzeitig die Entnahme und das Rückstellen der Bücher erfolgt. Bei beidseitig bestellten Doppelregalen sind an jeder Stirnseite der Regalblöcke Arbeitsbühnen erforderlich. Dabei können die Bücher auch in Behältern abgestellt werden, so daß sich die Umlaufregalanlage rascher bedienen läßt, da nur die Behälter ein- und ausgelagert werden müssen, während die Aus- und Rücksortiervorgänge an einem anderen Arbeitsplatz erfolgen. Die Bestellungen der Bücher können im Halbtagesrythmus erledigt werden. Wenn die in den Regalen abgestellten, die Bücher aufnehmenden Behälter als adressierbare Container ausgebildet sind, so kann die Arbeitsbühne mit manueller Handhabung durch einen automatischen Endlade- und Beschickungsmechanismus, d.h. durch ein Regalförderzeug ersetzt werden, wodurch die Umlaufregalanlage zum vollautomatischen Lager - und Fördersystem wird. Dann umfaßt die Umlaufregalanlage in den Regalgassen ferner Entnahmeroboter für die adressierbaren Container, Ein- und Ausgabestationen für Bestellungen sowie für den Empfang und die Rückgabe der Bücher und schließlich eine zentrale Steuereinheit.

Eine derartige bekannte Umlaufregalanlage hat jedoch den Nachteil, daß die Zugriffszeit zu den einzelnen Büchern relativ lang ist und daß ein erhebliches Transport volumen aufgrund der mit mehreren, z.B. 10 bis 20 Büchern angefüllten adressierbaren Containern anfällt. Außerdem sind die Regale der vorbekannten Umlaufregalanlage relativ breit, bis zu 10 m, so daß zur Entnahme eines einzelnen Buches eine große Menge an Büchern und damit ein großes Gewicht zu bewegen ist. Dies verursacht Kosten für die Antriebsenergie zur Bewegung der Regale.

Der Erfindung liegt von daher die Aufgabe zugrunde, eine Regalanlage der gattungsgemäßen Art zu schaffen, bei welcher die Zugriffszeit zu den einzelnen Büchern relativ gering ist und bei welcher zur Entnahme und zum Zurückstellen eines einzelnen Buches nur eine relativ geringe Anzahl von Büchern bewegt werden muß, so daß die Energiekosten gering sind.

Zur Lösung dieser Aufgabe sieht die Erfindung vor, daß die Aufnahmen als ebene Buchträger zur Auflage horizontal flachliegender Bücher und die Regale als schmale, hohe und mindestens einseitig offene Kästen ausgebildet sind, deren Innenwände mit einer großen Anzahl übereinander angeordneter Führungselemente zur Halterung der Buchträger versehen sind. Erfindungsgemäß nimmt jeder Buchträger nur ein einzelnes Buch auf, wobei unter Buch ein Druckwerk jeglicher Art, auch eine Fachzeitschrift und dgl., verstanden wird. Entgegen der herkömmlichen Aufnahme von Büchern in den bekannten Regalen werden die Bücher flach gelegt und einzeln auf je einen Buchträger aufgebracht. Diese Buchträger werden in schmale, vertikale, als Regale ausgebildete Kästen eingeschoben, welche mit den Führungselementen zur Halterung der Buchträger versehen sind. Derartige schmale, vertikale Kästen stehen ebenfalls im Gegensatz zu den herkömmlichen, sich im wesentlichen horizontal erstreckenden Regalen zur Aufnahme von adressierbaren Containern für jeweils mehrere Bücher. Durch die erfindungsgemäße Verwendung der ebenen Buchträger einerseits und der sich vertikal erstreckenden, schmalen Kästen zur Aufnahme der Buchträger andererseits wird eine ideale kompakte Umlaufregalanlage geschaffen, bei welcher jedes einzelne Buch durch Zugriff zu jedem einzelnen Buchträger in kürzester Zeit entnommen werden kann. Auch ist jeweils nur ein relativ geringes Gewicht an Büchern zu bewegen, um Zugriff zu einem einzelnen, auf einem Buchträger befindlichen Buch zu haben.

Vorteilhafte Ausbildungsformen der Buchträger und der Regale ergeben sich aus den Unteransprüchen.

In besonders bevorzugter Weise läßt sich ein erfindungsgemäßer, vertikaler Kasten mit einer Vielzahl übereinander angeordneter Buchträger, z.B. 20 Buchträger je Höhenmeter innerhalb eines vollautomatischen Hochregallagers einbauen. Hierfür sind innerhalb eines mehretagigen Gebäudes eine Vielzahl von die vertikalen Kästen aufnehmenden Umlaufförderer nebeneinander und übereinander angeordnet. In einem alle Etagen durchgreifenden Bedienraum ist ein in horizontaler und vertikaler Richtung bewegbares Bedienungsgerät angeordnet, das die mit codierbaren Adressen versehenen Buchträger aus dem jeweiligen vertikalen Kasten zu einer Ausgabestelle und umgekehrt fördert.

Aus der EP-A-0.022.441 ist zwar bereits eine Umlaufregalanlage für Kleinteile mit einseitig offenen, vertikalen Regalkästen und mit in diesen angeordneten adressierbaren Containern zur Aufnahme von Kleinteilen vorbekannt. Hierbei sind die Regalkästen jedoch durch horizontale Böden in Aufnahmen für je einen adressierbaren Container unterteilt, der wiederum eine Vielzahl von Kleinteilen aufnimmt. Ferner ist aus der DE-C-1.219.864 eine ähnliche Umlaufregalanlage vorbekannt, bei welcher für die Aufnahme von Teilen auch Tragplatten auf in den Regalkästen befindlichen Konsolen aufgeschoben werden können. Die erfindungsgemäß beanspruchte flache Lagerung von einzelnen Büchern auf ebenen Buchträgern und deren dicht übereinanderliegende Anordnung auf Führungselementen schmaler Regalkästen ist hierdurch jedoch nicht vorbekannt, zumal die Lagerung von Büchern im Liegen erheblich von gängigen Vorstellungen der Lagerhaltung von Büchern in Bibliotheken abweicht.

Die Erfindung ist nachfolgend anhand eines in den Zeichnungen dargestellten Ausführungsbeispiel der Umlaufregalanlage näher erläutert. Es zeigen :

| Fig. 1 | eine Perspektivdarstellung eines Teils der Umlaufregalanlage, |
|---|---|
| Fig. 2 | die Vorderansicht eines vertikalen Regalkastens zur Aufnahme von den die Bücher aufnehmenden Buchträgern, |
| Fig. 3 | einen prinzipiellen Querschnitt durch den vertikalen Regalkasten gemäß Fig. 2, |
| Fig. 4 | eine Perspektivdarstellung des vertikalen Regalkastens gemäß Fig. 2 und 3, |
| Fig. 5 | eine Draufsicht auf innerhalb einer Etage nebeneinander angeordnete Umlaufförderer mit einer Vielzahl vertikaler Regalkästen, |
| Fig. 6 bis 8 | vergrößerte Darstellungen der Umlaufförderer in verschiedenen Stellungen der vertikalen Regalkästen, |
| Fig. 9 | eine perspektivische Prinzipdarstellung nebeneinander befindlicher vertikaler Regalkästen mit einem Regalbedienungsgerät, |
| Fig. 10 | eine perspektivische Darstellung des Regalbedienungsgerätes und |
| Fig. 10 bis 12 | perspektivische Darstellungen von Regalbedienungsgeräten. |

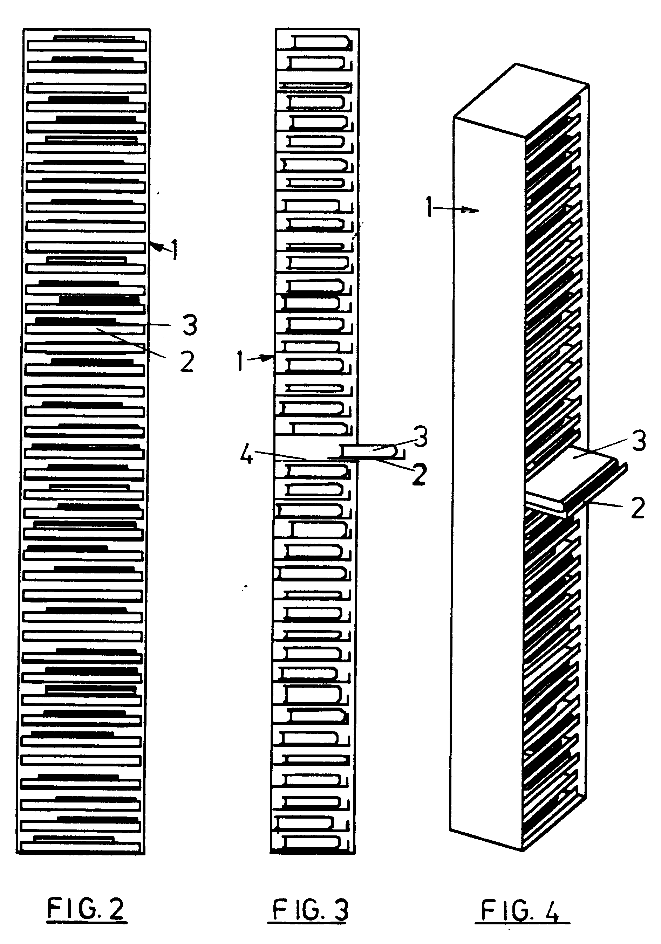

Die Umlaufregalanlage für die Bücher einer Bibliothek umfaßt eine Vielzahl vertikaler Regalkästen 1 für wiederum eine Vielzahl von Buchträgern 2 für Bücher 3. Als Bücher werden hier jegliche Arten von Druckwerken verstanden, insbesondere auch Fachzeitschriften und dgl. Die Buchträger 2 sind als flache Aufnahmewannen ausgebildet, die aus Stahlblech oder Kunststoff bestehen können. Bei ebener Ausbildung der flachen Buchträger können deren Oberflächen mit einer rutschfesten Schicht versehen sein. Die vertikalen Regalkästen 1 weisen eine Vielzahl übereinander angeordneter Führungselemente 4 an ihren Innenwänden auf. Derartige Führungselemente 4 können Führungsschienen, Einschubrillen od. dgl. sein. Auf diese Weise werden, wie es insbesondere in den Figuren 2 bis 4 dargestellt ist, innerhalb eines sich vertikal erstreckenden schmalen Regalkastens eine Vielzahl von Büchern 3 aufgenommen, z.B. können 20 übereinander angeordnete Buchträger 2 auf einen laufenden Meter an Regalhöhe untergebracht werden. Die einzelnen Buchträger 2 sind mit codierbaren Adressenträgern versehen, so daß sie innerhalb eines später noch beschriebenen vollautomatischen Hochregallagers bewegbar und transportierbar sind.

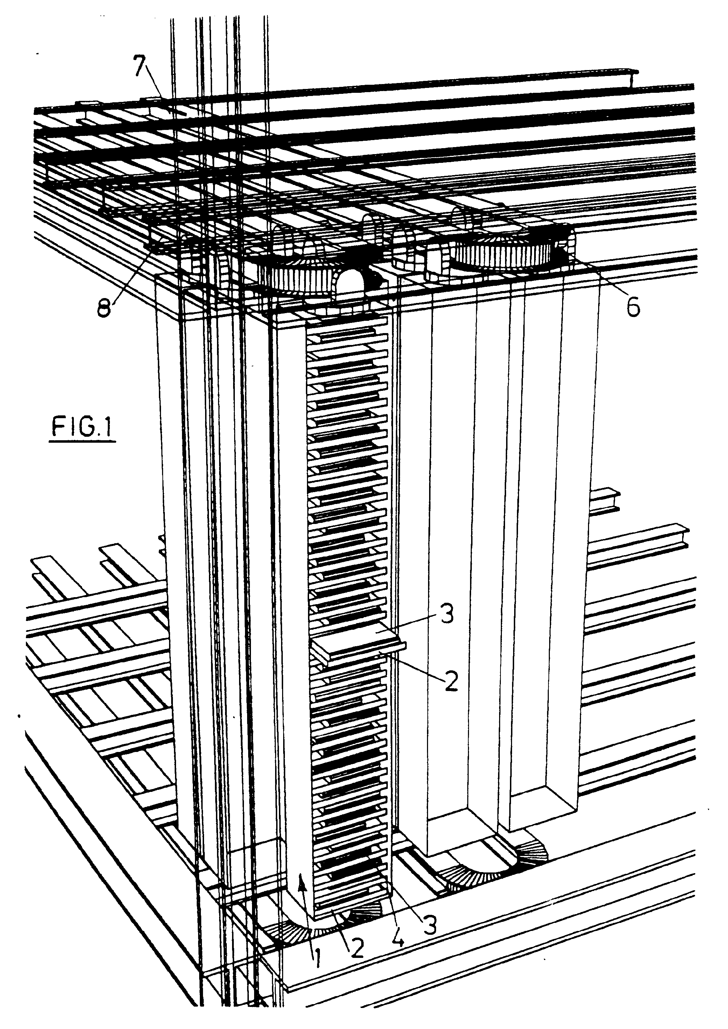

Wie es die Fig. 1 zeigt, sind die vertikalen Regalkästen 1 an sich horizontal erstreckenden Umlaufförderern 6 angeordnet, die aus in einem engen Oval angeordneten U-förmigen Schienen 7 und Antriebselementen 8 zum Transport der vertikalen Regalkästen 1 entlang der Schienen 7 ausgebildet sind. Die U-förmigen Schienen 7 sind sowohl oberhalb als auch unterhalb der vertikalen Regalkästen 1 vorgesehen. Als Antriebselemente 8 können Zahnriementriebe, Seilzüge od. dgl. verwendet werden, welche mit elektrischen Antrieben über elektrische Kupplungen betätigbar sind.

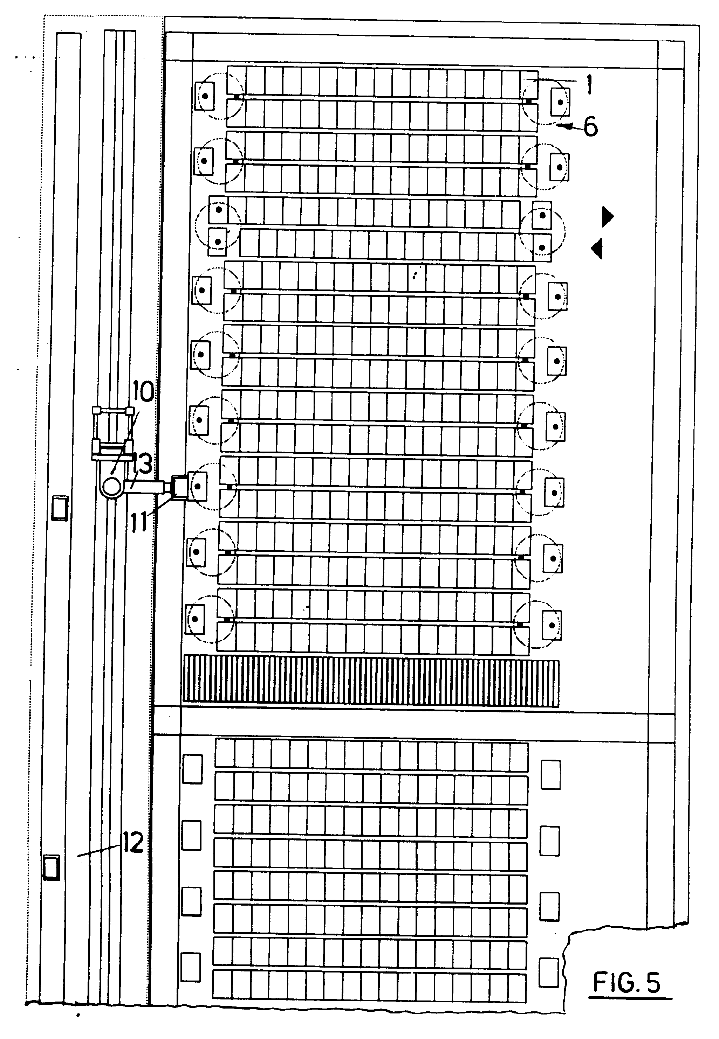

Ein Umlaufförderer 6 umfaßt als Rollmagazin beispielsweise 36 vertikale Regalkästen 1, die entlang der parallel geführten Schienen 7 lückenlos hintereinander angeordnet sind, wie es insbesondere die Figuren 5 und 6 bis 8 zeigen. Jeweils 18 Rollmagazine werden von einem nicht näher dargestellten Elektromotor angetrieben. So bildet ein in der Tiefe erschlossenes Rollmagazin eine Rollmagazinmatrix von 45 Spalten und 42 Zeilen.

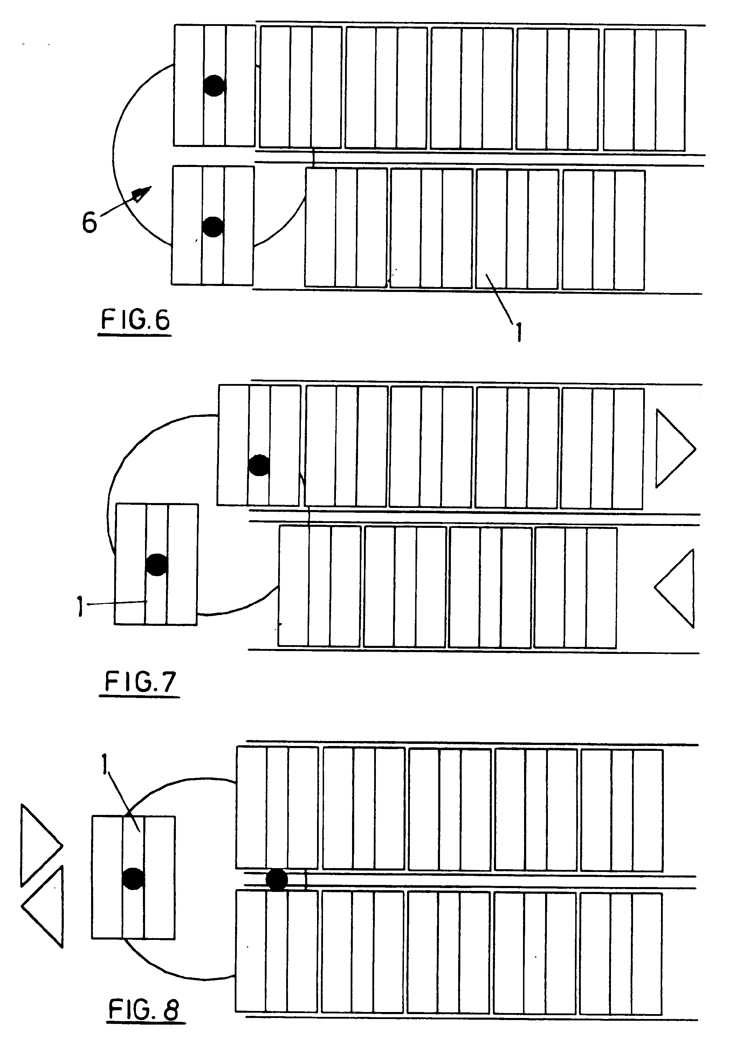

Die Figuren 6 bis 8 zeigen in einer Draufsicht auf ein Rollmagazin die verschiedenen Stellungen der vertikalen Regalkästen 1 bezüglich des Rollmagazines. Der Zugriff zu den einzelnen vertikalen Regalkästen 1 erfolgt in der in Fig. 8 mit den Doppelpfeilen dargestellten Lage. Die vertikalen Regalkästen 1 können einseitig oder zweiseitig mit Buchträgern 2 beschickt werden.

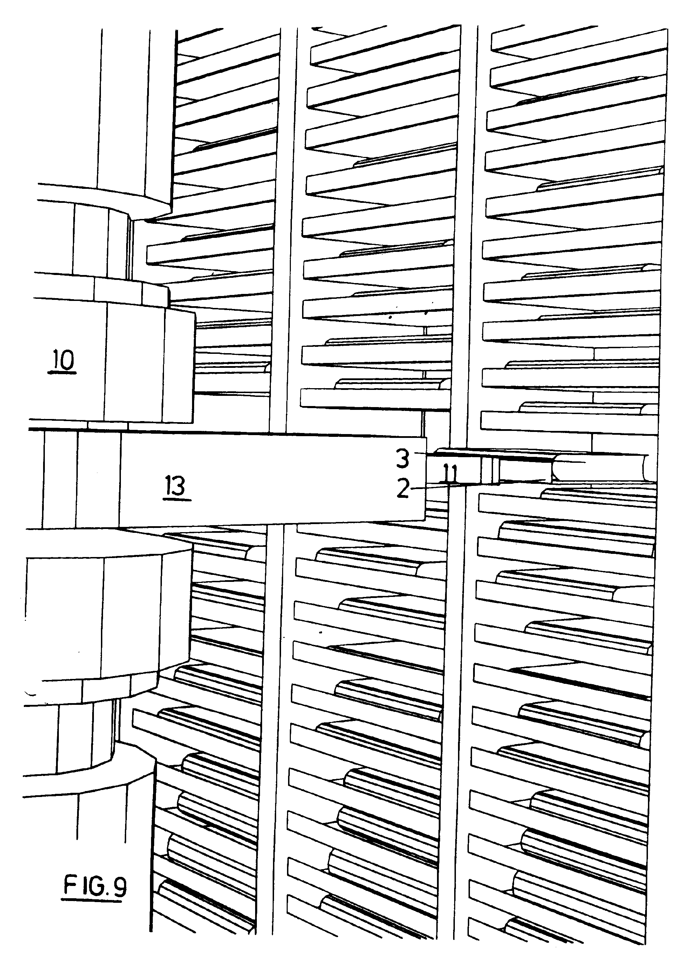

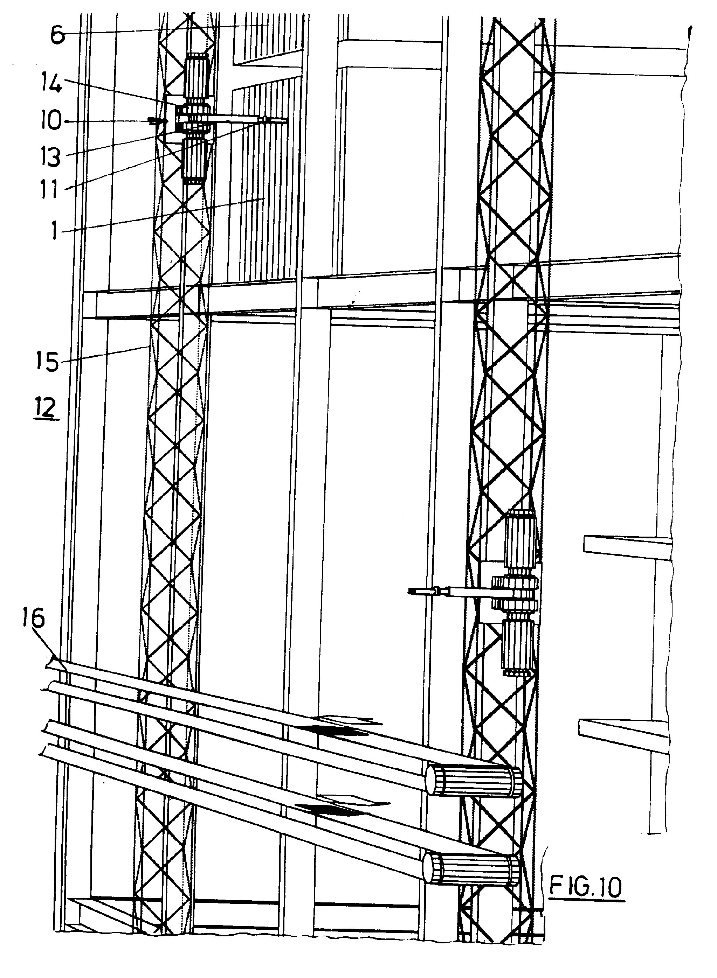

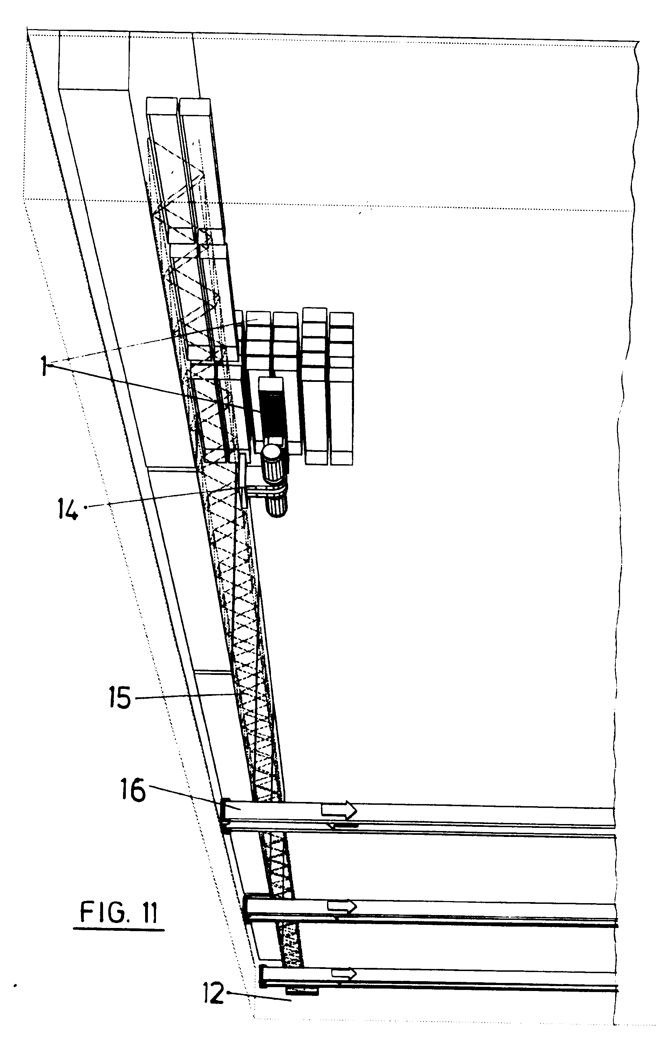

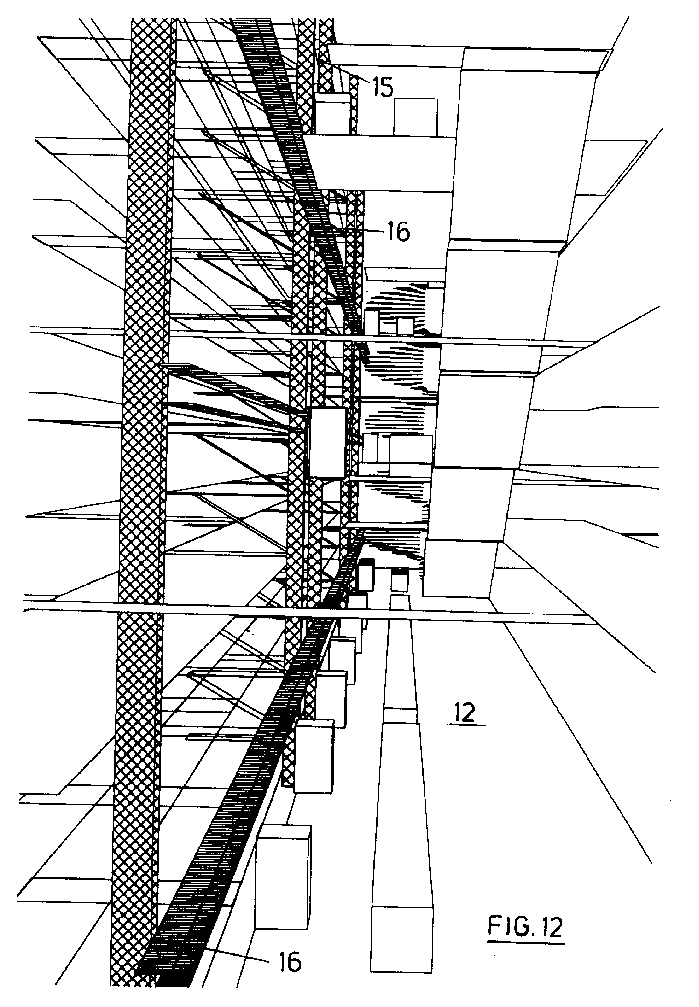

Zur Entnahme der Buchträger 2 aus den vertikalen Regalkästen und zur Rückführung der Buchträger 2 in die vertikalen Regalkästen 1 sind Regalbedienungsgeräte 10 vorgesehen, die mit Greifrobotern 11 versehen sind, wie es in Fig. 9 dargestellt ist. Hierzu sind innerhalb eines mehretagigen Gebäudes eine Vielzahl von Rollmagazine bildenden Umlaufförderer 6 nebeneinander und übereinander angeordnet, wobei in einem alle Etagen durchgreifenden Freiraum das in vertikaler und horizontaler Richtung bewegbare Regalbedienungsgerät 10 angeordnet ist, das die mit codierbaren Adressen versehenen Buchträger 2 von den einzelnen vertikalen Regalkästen 1 zu einer Ausgabestelle und von einer Eingabestelle zurück zu den einzelnen vertikalen Regalkästen 1 fördert. Ein derartiges Regalbedienungsgerät 10 besteht aus einem drehbaren Teleskoparm 13 mit programmgesteuerter Laufkatze 14. Der Teleskoparm 12 kann magnetisch an einen Buchträger 2 angekoppelt werden. Die Laufkatze 14 gleitet an einem Gittermast 15 auf und ab, der seinerseits horizontal entlang der Rollmagazine verfahrbar ist. Auf diese Weise erreichtder Teleskoparm 13 jeden Buchträger 2 des Kaßtens 1, der ihm von den Rollmagazinen entgegengewälzt wird. In drei definierten Ebenen laufen Transportbänder 16 um, auf welche die Teleskoparme 13 die Buchträger 2 ablegen bzw. von denen die Teleskoparme 13 die Buchträger 2 herunternehmen. Mittels der Transportbänder 16 gelangen die Buchträger 2 zu den Ausgabestellen (Terminals) in den Lesesälen der Bibliothek.

In den Terminals der Lesesäle gibt es Tastaturen, über welche die Daten des gewünschten Buches an eine nicht näher dargestellte Steuereinrichtung weitergeleitet werden. Dort werden die Daten in den Adresscode übersetzt, der den jeweiligen Büchern 3 bzw. deren Buchträgern 2 zugeordnet ist und der sowohl an den roboterartigen Teleskoparm 13 als auch an das Rollmagazin aus den Umlaufförderern 6 übermittelt wird. Das Rollmagazin setzt sich sofort in Bewegung und wälzt den entsprechenden vertikalen Regalkasten 1 nach vorn in die Aus- und Eingabestellung gemäß Fig. 1. Der roboterartige Teleskoparm 13 merkt sich die Adresse des Buchträgers 2 und reiht diese in den Ablauf seiner übrigen Aufträge ein. Bevor sich der Teleskoparm 13 in eine bestimmte Richtung bewegt, sammelt er alle Aufträge mit benachbarter Adresse und führt diese dann in ökonomischer Reihenfolge aus. Für beide Systeme wird eine Zykluszeit von 20 sec angenommen. Da diese Zeiten sich überlagern können, bewältigt das System pro Regaleinheit ca. 250 Bücher pro Stunde. Das Regal besteht dabei aus fünf identischen Einheiten (Rollmagazinen),denen jeweils ein roboterartiger Teleskoparm 13 zugeordnet ist. Der zur Kennzeichnung der Lage der Bücher 3 verwendete Adresscode kann sowohl an den Büchern 3 als auch an den Bücherträgern 2 sowie an den Aufnahmestellen für die Bücher 3 in den einzelnen Regalkästen 1 angebracht sein. Die beschriebene Umlaufregalanlage zeichnet sich insbesondere durch einen geringen Raumbedarf aus.

**Patentansprüche**

1. Regalanlage, insbesondere Umlaufregalanlage, für die Bücher einer Bibliothek, mit mindestens einseitig offenen vertikalen Regalkästen und mit in diesen angeordneten Einschüben zur Aufnahme der Bücher, **dadurch gekennzeichnet**, daß jeder Einschub als ebener Buchträger (2) zur Auflage je eines horizontal flachliegenden Buches (3) ausgebildet ist und daß die Innenwände der schmal ausgebildeten Regalkästen (1) mit einer großen Anzahl übereinanderangeordneter Führungselemente (21) zur Halterung der Buchträger (2) versehen sind.

2. Regalanlage nach Anspruch 1, dadurch gekennzeichnet, daß die Buchträger (2) als flache Aufnahmewannen ausgebildet sind.

3. Regalanlage nach Anspruch 1 oder 2, dadurch gekennzeichnet, daß die Buchträger (2) aus Stahlblech bestehen.

4. Regalanlage nach Anspruch 1 oder 2, dadurch gekennzeichnet, daß die Buchträger aus Kunststoff bestehen.

5. Regalanlage nach einem der Ansprüche 1 bis 4, dadurch gekennzeichnet, daß die Oberfläche der Buchträger (2) mit einer rutschfesten Schicht versehen ist.

6. Regalanlage nach einem der Ansprüche 1 bis 5, dadurch gekennzeichnet, daß die Führungselemente (4) der vertikalen Regalkästen (1) als Führungsschienen für die flachen Buchträger (2) ausgebildet sind.

7. Regalanlage nach einem der Ansprüche 1 bis 5, dadurch gekennzeichnet, daß die Führungselemente (4) für die Buchträger (2) als innerhalb der Seitenwände der vertikalen Regalkästen (1) ausgebildete Einschubrillen ausgebildet sind.

8. Regalanlage nach einem der Ansprüche 1 bis 7, dadurch gekennzeichnet, daß die vertikalen Regalkästen (1) an horizontalen Umlaufförderern (6) zur Ausbildung von Rollmagazinen angeordnet sind.

9. Regalanlage nach Anspruch 8, dadurch gekennzeichnet, daß die horizontalen Umlaufförderer (6) aus in einem engen Oval angeordneten Schienen (7) und Antriebselementen (8) zur Bewegung der vertikalen Regalkästen (1) entlang der Schienen (7) ausgebildet sind.

10. Regalanlage nach einem der Ansprüche 1 bis 9, dadurch gekennzeichnet, daß innerhalb eines mehretagigen Gebäudes eine Vielzahl von die Rollmagazine bildenden Umlaufförderern (6) mit einer Vielzahl vertikaler Regalkästen (1) nebeneinander und übereinander angeordnet sind und daß in einem alle Etagen durchgreifenden Bedienraum (12) ein in vertikaler und horizontaler Richtung bewegbares Regalbedienungsgerät (10) in Form eines roboterartigen Teleskoparmes (13) angeordnet ist, das die mit codierbaren Adressen (9) versehenen Buchträger (2) vom vertikalen Regalkasten (1) zu einer Ausgabestelle und von einer Eingabestelle zurück zum Regalkasten (1) fördert.

**Claims**

1. A bookshelf system, in particular a circular bookshelf system, for the books of a library, comprising vertical bookshelf boxes being open at least on one side, and drawers arranged therein for receiving the books, characterized by that each drawer is adapted as a flat book carrier (2) for placing a book (3) disposed horizontally flat thereonto, and that the inner walls of the bookshelf boxes (1) having a flat cross-section are provided with a plurality of guide elements (21) located above each other for supporting the book carriers (2).

2. A bookshelf system according to claim 1, characterized by that the book carriers (2) are adapted as flat receiving tubs.

3. A bookshelf system according to claims 1 or 2, characterized by that the book carriers (2) are made of sheet-steel.

4. A bookshelf system according to claims 1 or 2, characterized by that the book carriers (2) are made of plastic.

5. A bookshelf system according to one of claims 1 to 4, characterized by that the surface of the book carriers (2) is provided with an anti-slip layer.

6. A bookshelf system according to one of claims 1 to 5, characterized by that the guide elements (4) of the vertical bookshelf boxes (1) are adapted as guide rails for the flat book carriers (2).

7. A bookshelf system according to one of claims 1 to 5, characterized by that the guide elements (4) for the book carriers (2) are adapted as drawer grooves formed within the side walls of the vertical bookshelf boxes (1).

8. A bookshelf system according to one of claims 1 to 7, characterized by that the vertical bookshelf boxes (1) are disposed at horizontal circular conveyors (6) for obtaining rolling magazines.

9. A bookshelf system according to claim 8, characterized by that the horizontal circular conveyors (6) are formed of rails (7) and drive elements (8) provided in a narrow oval arrangement for moving the vertical bookshelf boxes (1) along the rails (7).

10. A bookshelf system according to one of claims 1 to 9, characterized by that within a multiple-floor building, a plurality of circular conveyors (6) forming the rolling magazines with a plurality of vertical bookshelf boxes (1) are disposed beside and above each other, and that in an operating space (12) passing through all floors, a bookshelf operating device (10) movable vertically and horizontally in the form of a robot-type telescopic arm (13) is provided, said bookshelf operating device conveying the book carriers (2) provided with code addresses from the vertical bookshelf box (1) to a distribution location, and from a reception location back to the bookshelf box (1).

**Revendications**

1. Système d'étagères, en particulier système d'étagères à circulation, pour les livres d'une bibliothèque, comportant des caisses d'étagère verticales étant ouvertes au moins d'un côté, et des tiroirs disposés là-dedans pour loger les livres, caractérisé en ce que chaque tiroir est agencé sous la forme d'un porteur de livre (2) plat pour y imposer un livre (3) agencé horizontalement plat, et que les parois intérieures des caisses d'étagère (1) ayant une section transversale étroite sont pourvues d'une multitude d'éléments de guidage (21) disposés l'un sur l'autre pour tenir les porteurs de livre (2).

2. Système d'étagères selon la revendication 1, caractérisé en ce que les porteurs de livre (2) sont agencés sous la forme de cuves de logement plates.

3. Système d'étagères selon la revendication 1 ou 2, caractérisé en ce que les porteurs de livre (2) sont fabriqués en tôle d'acier.

4. Système d'étagères selon la revendication 1 ou 2, caractérisé en ce que les porteurs de livre (2) sont fabriqués en matière plastique.

5. Système d'étagères selon une des revendications 1 à 4, caractérisé en ce que la surface des porteurs de livre (2) est pourvue d'une couche antidérapante.

6. Système d'étagères selon une des revendications 1 à 5, caractérisé en ce que les éléments de guidage (4) des caisses d'étagère (1) verticales sont agencés sous la forme de rails de guidage pour les porteurs de livres (2) plats.

7. Système d'étagères selon une des revendications 1 à 5, caractérisé en ce que les éléments de guidage (4) pour les porteurs de livre (2) sont agencés sous la forme de rainures de glissière formées au-dedans des parois latérales des caisses d'étagère (1) verticales.

8. Système d'étagères selon une des revendications 1 à 7, caractérisé en ce que les caisses d'étagère (1) verticales sont disposées à des transporteurs horizontaux à circulation (6) pour former des magasins de roulement.

9. Système d'étagères selon la revendication 8, caractérisé en ce que les transporteurs horizontaux à circulation (6) sont formés de rails (7) et d'éléments d'entraînement (8) disposés dans un ovale étroit pour mouvoir les caisses d'étagère (1) le long des rails (7).

10. Système d'étagères selon une des revendications 1 à 9, caractérisé en ce qu'au-dedans d'un bâtiment à plusieurs étages, une multitude de transporteurs à circulation (6) formant les magasins de roulement avec une multitude de caisses d'étagère (1) verticales est prévue les uns au-dessus des autres, et que dans un espace de manoeuvre (12) s'étendant à travers de tous les étages, un dispositif de manoeuvre (10) de l'étagère mobile en direction verticale et horizontale est prévu sous la forme d'un bras téléscopique (13) de type robot, qui transporte les porteurs de livre (2) pourvus d'adresses codées (9) de la caisse d'étagère (1) verticale à une position de distribution et retour d'une position de réception à la caisse d'étagère (1).

FIG.1

FIG. 2

FIG. 3

FIG. 4

FIG. 5

FIG.6

6

1

FIG.7

1

FIG. 8

1

FIG.9

FIG.10

FIG. 11

15

16

12

FIG. 12

16